(19) Europäisches Patentamt / European Patent Office / Office européen des brevets

(11) **EP 3 477 846 B1**

(12) **EUROPEAN PATENT SPECIFICATION**

(45) Date of publication and mention
of the grant of the patent:
**17.02.2021 Bulletin 2021/07**

(51) Int Cl.:
***H02P 6/16*** *(2016.01)*

(21) Application number: **17198824.9**

(22) Date of filing: **27.10.2017**

(54) **METHOD FOR DETERMINING A MEASURING OFFSET OF A ROTOR POSITION SENSOR, CONTROLLER UNIT FOR AN ELECTRIC MACHINE AND ELECTRIC MACHINE FOR A VEHICLE**

VERFAHREN ZUR BESTIMMUNG EINES MESSUNGS-OFFSETS EINES ROTORPOSITIONSSENSORS, STEUERGERÄTEEINHEIT FÜR EINE ELEKTRISCHE MASCHINE UND ELEKTRISCHE MASCHINE FÜR EIN FAHRZEUG

PROCÉDÉ POUR DÉTERMINER UN DÉCALAGE DE MESURE D'UN CAPTEUR DE POSITION DE ROTOR, UNITÉ DE COMMANDE POUR UNE MACHINE ÉLECTRIQUE ET MACHINE ÉLECTRIQUE POUR UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2019 Bulletin 2019/18**

(73) Proprietor: **Valeo Siemens eAutomotive Germany GmbH**
**91056 Erlangen (DE)**

(72) Inventor: **WIEDMANN, Karsten**
**91052 Erlangen (DE)**

(74) Representative: **Dr. Gassner & Partner mbB**
**Wetterkreuz 3**
**91058 Erlangen (DE)**

(56) References cited:
**EP-A1- 3 223 421      DE-A1-102011 090 127**
**DE-A1-102013 221 709      US-A1- 2011 130 996**
**US-A1- 2014 062 353**

## Description

The present invention relates to a method for determining a measuring offset of a rotor position sensor. Aside, the present invention relates to a controller unit for an electric machine and an electric machine.

Electric machines are frequently controlled depending on their current rotor position. Therefore, a rotor position information acquired by a rotor position sensor assigned to the rotor of the electric machine is used as an input quantity of a control unit of the electric machine. However, the rotor position information may have a certain offset with respect to the real rotor position due to the mounting accuracy of the rotor position sensor. Knowing this offset allows the control unit to adjust the measured rotor position information in order to increase the performance of the machine control.

DE 10 2013 221 709 A1 discloses a method for determining a deviation of a rotational speed sensor of a synchronous machine having rotor rotatable about an axis of rotation and a stator with stator phases. The method comprises the following steps: Rotating the rotor about the axis of rotation in a first direction of rotation with a first predetermined rotational speed with short-circuited stator phases; Determining first current values of respective current components in a d/q coordinate system; Rotating the rotor about the axis of rotation in a second direction of rotation opposite to the first direction of rotation with the first predetermined rotational speed with short-circuited stator phases; Determining second current values of the respective current components in the coordinate system; Determining a first deviation value of the deviation from the first and the second current values.

A further method is known from DE 10 2011 090 127 A1, which discloses a system comprising a drive motor, a resolver configured to detect a rotation position of the drive motor and a control unit configured to determine an offset candidate value of the resolver based on predetermined data, to control all currents to be zero, to detect a voltage generated in the drive motor while all currents are zero, to calculate an average voltage using the detected value and to calculate a final offset value using the average voltage and the offset candidate value. The final offset value is calculated depending on average voltage values of axis d and axis q.

A control method for a hybrid vehicle determining an offset of a resolver is disclosed in DE 10 2011 090 127 A1.

However, for certain automotive applications it is necessary to determine the measuring offset with a certain degree of integrity as a torque estimation based upon the rotor position information is considered being crucial for reasons of safety.

Therefore, the object of the present invention is to provide a possibility for determining the measuring offset of a rotor position sensor with enhanced integrity and/or accuracy.

This object is solved by a method according to claim 1.

The invention is based upon the consideration to increase the integrity and/or the accuracy of a rotor position sensor's measuring offset by using the q-current. As currents are typically crucial input values for controlling the electric machine, they are often acquired with a higher integrity level or with more accurate detection means than voltages. Using the q-current may thus enhance the integrity and/or the accuracy of determining the measuring offset, advantageously.

For acquiring the currents, the electric machine may comprise a current detection unit providing current information representing currents of at least two phases of the electric machine. The q-current may be determined by applying a dq-transformation to the acquired currents or current information, respectively.

According to the invention, a candidate value for the d-axis of the electric machine is determined depending on voltages acquired over stator windings of the electric machine, wherein the plausibility of the candidate value is evaluated depending on the q-current. Therefore, the electric machine may comprise a voltage detection unit coupled to the phases of the electric machine. In order to determine the candidate value for the d-axis of the electric machine a dq-transformation based on the voltages described by the voltage information may be performed. The q-current may be determined under consideration of the current information and the candidate value.

For evaluating the plausibility of the candidate value the controller may apply a plausibility criterion to the q-current. If the criterion is fulfilled the measuring offset of the rotor position may be set corresponding to the determined d-axis. The determined measuring offset may be stored in a memory unit and/or used to adjust a rotor position signal provided by the rotor position sensor when controlling the electric machine. If the plausibility criterion is not fulfilled the inventive method may determine a new candidate value for the d-axis and/or output an error signal. The error signal may notify an operator of the electric machine that determining the measuring offset failed.

According to the invention, the voltages for determining the candidate value are acquired with a lower integrity level than the currents acquired for determining the q-current. Particularly, the voltage detection unit may have a lower integrity level than the current detection unit. Acquiring the voltages with the lower integrity level allows the usage of less complex and cheaper voltage detection units but does not decrease the integrity level of the determined measuring offset as its plausibility is evaluated based upon the q-current acquired with the higher integrity level. As current detection is usually performed with the high integrity level costly voltage detection units with a high integrity level may be omitted, advantageously. Here, the term "integrity level" particularly relates to an automotive safety integrity level (ASIL) according to ISO 26262 and IEC 61508. Thus, the voltages for determining the candidate value are preferably acquired according to a QM-level. The currents acquired for determining the q-current may be acquired according to a level of at least ASIL A, preferably ASIL C.

According to a first preferred embodiment of the invention the plausibility is assumed if the absolute value of the determined q-current lies below a predefined threshold value. Thus, the plausibility criterion may comprise a comparison of the absolute value of the determined q-current with the threshold value. That way, the plausibility criterion may be implemented very easily.

Alternatively, the plausibility may be assumed, if the angle of the current space vector in the dq-coordinate-system does not differ more than a predetermined threshold from zero degrees. Thus, the control unit may determine the current space vector and evaluate the plausibility by means of calculating its angle in the coordinate system and compare it to the threshold.

Practically, the voltages for determining the candidate value are acquired when applying a zero current to the stator windings. Thus, the inventive method may comprise a step of applying a zero current to the stator windings.

Furthermore, it is preferred that the voltages are acquired in a rotating state of the electric machine. For that, the inventive method may comprise a step of rotating the rotor. This may be performed by applying an external force to the rotor or by controlling the power converter to perform rotation with a predefined rate of rotation.

With respect to the method according to the invention, a d-current may be determined from the acquired currents, wherein the measuring offset may be determined depending additionally on the d-current. As the d-current is based upon the currents as well, a corresponding level of integrity and/or accuracy may be realized for the d-current for determining the measuring offset. Thus, the measuring offset can be directly determined based upon the currents without necessarily acquiring voltages.

Particularly, for determining the measuring offset the angle of the current space vector in the dq-coordinate-system is used. Exemplarily, the angle of the current space vector is determined by calculating an arctangent of the quotient of the q-current to the d-current and/or by using a phase locked loop.

Furthermore, for determining the measuring offset a predetermined offset angle may be added to the angle of the current space vector. The predetermined offset angle is typically caused by iron losses inside the electric machine. The predetermined offset may be stored in the or a memory unit of the control unit. Preferably, a predetermined offset is used that has been determined in advance, particularly by a measurement and/or a calculation.

With respect to the method according to the invention, it is further preferred that the short circuit is applied as an active short circuit. For that, a power converter with switching elements connected to a half bridge for each phase may be used to supply the stator windings, wherein the active short circuit is applied by switching the switching elements connected to the high potential of the power converter into their conducting state and the switching elements connected to the low potential of the power converter to their blocking state or vice versa. The power converter may be an inverter. The switching elements may be power semiconductors, e. g. insulated gate bipolar transistors or insulated gate field-effect transistors. Applying an active short circuit allows short circuiting the stator windings without further expense for additional switching elements.

Aside, the above object is solved by a control unit according to claim 12 and by an electric machine according to claim 13.

Statements referring to the inventive method apply analogously to the inventive control unit and the inventive electric machine, so that advantages of the inventive method may be achieved by the inventive control unit and the inventive electric machine as well.

In the following, the invention is described in detail, with reference to the schematic drawings which show:

Fig. 1  a block diagram of an embodiment of an electric machine according to the invention;

Fig. 2  a rotor of the electric machine depicted in Fig. 1;

Fig. 3  a flow chart of a first embodiment of a method according to the invention; and

Fig. 4  a flow chart of an example of a further method.

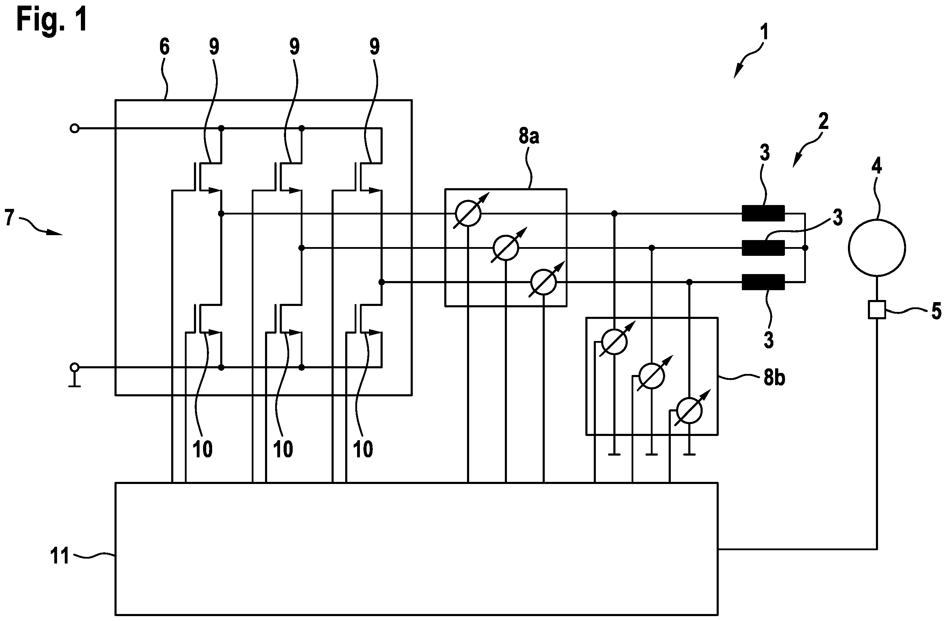

Fig. 1 is a block diagram of an electric machine 1, comprising a stator 2 with stator windings 3, a rotor 4 rotatably attached to the stator 2 and a rotor position sensor 5 assigned to the rotor. Besides, the electric machine 1 comprises a power converter 6 being configured as an inverter and connected to a DC-link 7 of the electric machine 1. Between the power converter 6 and the stator 2 a current detection unit 8a configured to measure currents flowing into the stator winding and a voltage detection unit 8b configured to acquire voltages dropping over the stator windings 3 are connected. Thereby, the voltage detection unit 8b acquires the voltages with a lower integrity level than the current detection unit 8a acquires the currents. With respect to an automotive application of the electric machine 1 the current detection unit 8a realizes an automotive safety integrity level (ASIL) C and the voltage detection unit 8b only a simple QM integrity level.

The power converter 6 comprises a plurality of switching elements 9, 10, e. g. insulated gate bipolar transistors (IGBT) or insulated gate field effect transistors (IGFET) suitable for power applications. By applying voltage to control terminals or gates of the switching elements 9, 10 a, particularly pulse-width modulated switching pattern is realized to drive the stator windings 3 in order to rotate the rotor with a certain rate of rotation.

Furthermore, the electric machine 1 comprises a control unit 11. The control unit 11 obtains a rotor position information describing the current rotation angle of the rotor 4 with respect to the stator 2, current information from the current detection unit 8a and voltage information from the voltage detection unit 8b. The control unit comprises an output for each control terminal of the switching elements 9, 10 to control the rotation of the rotor 4 as mentioned above. Of course, the electric machine 1 may comprise additional units such as driver units configured to amplify control signals of the control unit 11 to the switching elements 9, 10.

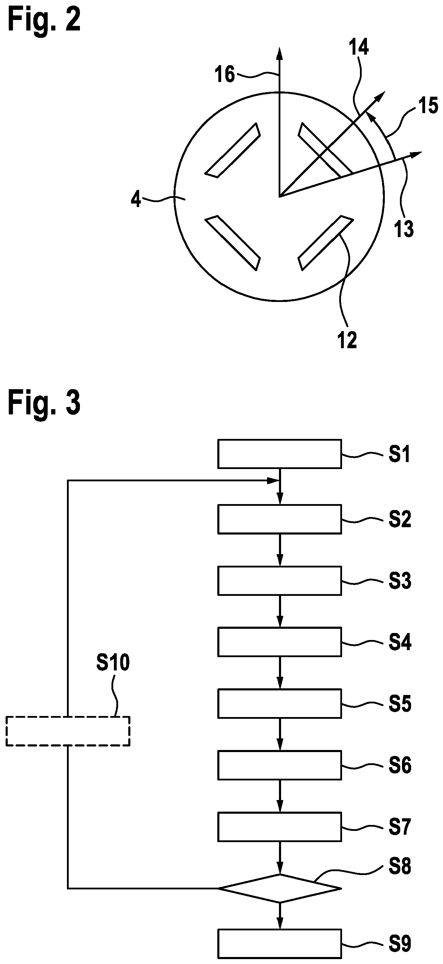

Fig. 2 is a schematic drawing of the rotor 4. The rotor 4 comprises a plurality of magnetic elements 12 rendering the electric machine 1 to a permanent-magnet synchronous motor. According to alternative embodiments, the electric machine 1 may be a separate excitation motor.

Aside, Fig. 2 depicts a zero axis 14 of the rotor position sensor 5 and a d-axis or magnetic axis 14. Due to mounting inaccuracies while installing the rotor position sensor 5 the d-axis 14 differs from a zero axis 13 by an angle 15 resulting in a measuring offset of the rotor position sensor 5. Thus, it is required to detect this measuring offset as the current rotor position is an important information for controlling the electric machine 1. Such a detection of the measuring offset is particularly necessary after mounting or a manipulation the rotor position sensor 5.

Fig. 3 is a flow chart of a first embodiment of a method for determining the measuring offset of the rotor position sensor 5. The control unit 11 of the electric machine 1 is configured to carry out the steps of the method, which is explained in detail below:

The method starts with the step S1 of rotating the rotor 4 with a certain rate of rotation. This may be accomplished by switching the switching elements 9, 10 with the suitable pulsing switching pattern or by an external force, e.g. applied to a shaft of the rotor 4. Within a following step S2 the controller 11 controls the power converter 6 to apply a zero current to the stator winding 3. According to the voltage differential equation of the electric machine 1, a voltage corresponding to the electric magnetic force (e.m.f.) is induced in the stator windings 3 by the magnetic field generated by the rotor 4.

According to a next step S3 of the method, voltages over the stator windings 3 are acquired by the voltage detection unit 8b and fed into the control unit 11. Note, that this acquisition of voltage information is carried out only with a QM-integrity-level.

Within a following step S4 a candidate value for the d-axis 14 of the electric machine 1 is determined depending on the voltages acquired over the stator windings 3 according to step S3. Therefore, the control unit 11 applies a dq-current information to the voltage information obtained by the voltage detection unit 8b. As a result, the determined d-axis may be assumed as a candidate value since it has been detected with QM level, whereas the d-axis or the measuring offset, respectively, should have a higher integrity level, e.g. ASIL C, for a control strategy of the electric machine 1 fulfilling automotive safety requirements.

Afterwards, the method comprises a step S5 of applying an active short circuit (ASC) of the stator windings 3. Therefore, the switching elements 9 connected to the high potential of the power converter 6 or the DC-link 7, respectively, are switched into their conducting state by the control unit 11. At the same time, the switching elements 10 connected to the low potential of the power converter 6 or the DC-link 7, respectively, are switched to their blocking state by the control unit 11. According to an alternative embodiment, the switching elements 10 are switched to their conducting state and the switching elements 9 are switched to their blocking state, whereby an ASC is realized as well.

Within a following step S6 currents flowing into the stator windings 3 are acquired by the current detection unit 8a and fed into the control unit 11. Afterwards, within a step S7 a q-current is determined by the control unit 11 based upon the current information obtained by the current detection unit 8a. The q-current refers to a q-axis 16 depicted in Fig. 2. As this current detection is performed with the ASIL C the determined q-current has a high integrity and a currency.

According to a following step S8 the plausibility of the candidate value is evaluated depending on the q-current of the stator winding 3 in the short-circuited state. This is carried out by applying a plausibility criterion on the q-current. According to one embodiment the plausibility criterion comprises a comparison of the determined q-current with the predetermined threshold value, wherein plausibility is assumed if the absolute value of the q-current lies below the threshold value. According to an alternative embodiment, plausibility is assumed if the angle of the current space vector in the dq-coordinate-System differs not more than a predefined threshold from zero degrees. Both plausibility criterions allow a proper evaluation of the plausibility of the candidate value which has been determined on values with the QM integrity only. As the evaluation of plausibility is carried out considering the q-current which has the higher ASIL C, a fulfilment of the plausibility criterion allows to regard the determined d-axis to have the same integrity level.

In the case of the fulfilment of the plausibility criterion the method proceeds to a step S9 in which the measuring offset of the rotor position sensor 5 is determined based on the determined and evaluated d-axis 13. The measuring offset is stored in a memory unit of the control unit 11 and used to adjust the rotor position information obtained by the rotor position sensor 5 when controlling the electric machine 1 afterwards.

If the plausibility criterion is not fulfilled, the method may step back to the step S2 for performing another determination of a candidate value. Additionally or alternatively the control unit 11 carries out a step S10 in which an error signal is output to indicate that the measuring offset has not been determined.

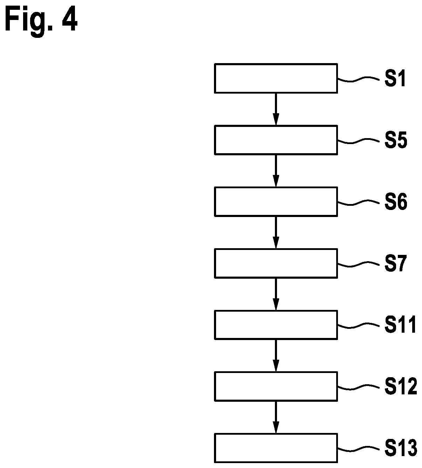

Fig. 4 is a flow chart of an example of a further method for determining the measuring offset of the rotor position sensor 5. Therein, steps corresponding to the above-mentioned embodiment have the same reference numbers.

The method starts with the step S1 of rotating the rotor 4. After that, the method proceeds directly to the step S5 of applying the ASC to the stator windings 3 followed by the step S6 of acquiring the currents flowing into the stator windings 3.

After that the step S7 of determining the q-current and an additional step S11 of determining a d-current based upon the acquired currents are performed in parallel or consecutively with in arbitrary order.

In a following step S12 the angle of the current space vector in the dq-coordinate-system is determined. Therefore, an arctangent of the quotient of the q-current to the d-current is determined. Written as a formula, this means that the current space vector angle

$$\alpha = \arctan \frac{i_q}{i_d}$$

is calculated, where $i_q$ denotes the q-current and $i_d$ denotes the d-current. Alternatively, the angle $\alpha$ may be determined using a phase locked loop.

Afterward, in a step S13 a predetermined offset angle $\beta$ is added to the angle of the current space vector $\alpha$. The predetermined offset angle is stored in the memory unit of the control unit 11 and represents iron losses inside the electric machine 1. The predetermined offset was measured and/or calculated in advance. Finally, the measuring offset of the rotor position sensor 5 is determined by adding $\alpha$ and $\beta$, stored in the memory unit and used to adjust the rotor position information obtained by the rotor position sensor 5 when controlling the electric machine 1 afterwards.

According to a further embodiment, the first embodiment and example of the further method are combined.

**Claims**

1. Method for determining a measuring offset of a rotor position sensor (5) assigned to a rotor (4) of an electric machine (1), **characterized by** comprising steps of

    - determining a candidate value for the d-axis (15) of the electric machine (1) depending on voltages acquired over stator windings (3) of the electric machine (1);
    - applying a short circuit to the stator windings (3) of the electric machine (1);
    - acquiring currents flowing into the stator windings (3) in the short-circuited state;
    - evaluating the plausibility of the candidate value depending on a q-current determined from the acquired currents; and
    - determining the measuring offset depending on the q-current;

    wherein the voltages for determining the candidate value are acquired with a lower integrity level than the currents acquired for determining the q-current.

2. Method according to claim 1, **characterized in that** the plausibility is assumed, if the absolute value of the determined q-current lies below a predefined threshold value.

3. Method according to claim 1, **characterized in that** the plausibility is assumed if the angle of the current space vector in the dq-coordinate-system does not differ more than a predetermined threshold from zero degrees.

4. Method according to any of the preceding claims, **characterized in that** the voltages for determining the candidate value are acquired when applying a zero current to the stator windings (3).

5. Method according to any of the preceding claims, **characterized in that** the voltages are acquired in a rotating state of the electric machine (1).

6. Method according to any of the preceding claims, **characterized in that** a d-current is determined from the acquired currents, wherein the measuring offset is determined depending additionally on the d-current.

7. Method according to claim 6, **characterized in that** for determining the measuring offset the angle of the current space vector in the dq-coordinate-system is used.

8. Method according to claim 7, **characterized in that** the angle of the current space vector is determined by calculating an arctangent of the quotient of the q-current to the d-current and/or by using a phase locked loop.

9. Method according to claim 7 or 8, **characterized in that** for determining the measuring offset a predetermined offset angle is added to the angle of the current space vector.

10. Method according to any of the preceding claims, **characterized in that** the short circuit is applied as an active short circuit.

**11.** Method according to claim 10, **characterized in that** a power converter with switching elements (9, 10) connected to a half bridge for each phase is used to supply the stator windings (3), wherein the active short circuit is applied by switching the switching elements (9) connected to the high potential of the power converter into their conducting state and the switching elements (10) connected to the low potential of the power converter to their blocking state or vice versa.

**12.** Control unit (11) for an electric machine (1) **characterized in that** it is configured to

- determine a candidate value for the d-axis (15) of the electric machine (1) depending on voltages acquired over stator windings (3) of the electric machine (1);
- apply a short circuit to stator windings (3) of the electric machine (1);
- acquire currents flowing into the stator windings (3) in the short-circuited state;
- evaluate the plausibility of the candidate value depending on a q-current determined from the acquired currents; and
- determine the measuring offset of a rotor position sensor (5) assigned to a rotor (4) of the electric machine (1) depending on the q-current,

wherein the voltages for determining the candidate value are acquired with a lower integrity level than the currents acquired for determining the q-current.

**13.** Electric machine (1) for a vehicle, comprising a stator (2) with stator windings (3), a rotor (4) rotatably attached to the stator (2), a rotor position sensor (5) assigned to the rotor (4) and a control unit (11) according to claim 12.

**Patentansprüche**

**1.** Verfahren zum Bestimmen eines Mess-Offsets eines Rotorpositionssensors (5), der einem Rotor (4) einer elektrischen Maschine (1) zugeordnet ist, **gekennzeichnet durch** die folgenden Schritte:

- Bestimmen eines Kandidatenwerts für die d-Achse (15) der elektrischen Maschine (1) in Abhängigkeit von den über die Statorwicklungen (3) der elektrischen Maschine (1) erfassten Spannungen;
- Anlegen eines Kurzschlusses an die Statorwicklungen (3) der elektrischen Maschine (1);
- Erfassen von Strömen, die im kurzgeschlossenen Zustand in die Statorwicklungen (3) fließen;
- Bewerten der Plausibilität des Kandidatenwertes in Abhängigkeit von einem aus den erfassten Strömen bestimmten q-Strom; und
- Bestimmung des Mess-Offsets in Abhängigkeit des q-Stroms;

wobei die Spannungen zur Bestimmung des Kandidatenwertes mit einem niedrigeren Integritätspegel als die zur Bestimmung des q-Stromes erfassten Ströme erfasst werden.

**2.** Verfahren nach Anspruch 1, **dadurch gekennzeichnet, dass** Plausibilität angenommen wird, wenn der Absolutwert des ermittelten q-Stromes unter einem vorgegebenen Schwellenwert liegt.

**3.** Verfahren nach Anspruch 1, **dadurch gekennzeichnet, dass** die Plausibilität angenommen wird, wenn der Winkel des Stromraumvektors im dq-Koordinatensystem nicht mehr als ein vorbestimmter Schwellenwert von null Grad abweicht.

**4.** Verfahren nach einem der vorstehenden Ansprüche, **dadurch gekennzeichnet, dass** die Spannungen zur Bestimmung des Kandidatenwertes durch Anlegen eines Nullstroms an die Statorwicklungen (3) erhalten werden.

**5.** Verfahren nach einem der vorhergehenden Ansprüche, **dadurch gekennzeichnet, dass** die Spannungen in einem rotierenden Zustand der elektrischen Maschine (1) erfasst werden.

**6.** Verfahren nach einem der vorhergehenden Ansprüche, **dadurch gekennzeichnet, dass** ein d-Strom aus den erfassten Strömen bestimmt wird, wobei der Mess-Offset zusätzlich in Abhängigkeit vom d-Strom bestimmt wird.

**7.** Verfahren nach Anspruch 6, **dadurch gekennzeichnet, dass** zur Bestimmung des Mess-Offsets der Winkel des Strom-Raum-Vektors im dq-Koordinatensystem verwendet wird.

**8.** Verfahren nach Anspruch 7, **dadurch gekennzeichnet, dass** der Winkel des Stromraumvektors durch Berechnung eines Arcustangens des Quotienten aus dem q-Strom zum d-Strom und/oder durch Verwendung eines Phasenregelkreises bestimmt wird.

**9.** Verfahren nach Anspruch 7 oder 8, **dadurch gekennzeichnet, dass** zur Bestimmung des Mess-Offsets ein vorbestimmter Offset-Winkel zu dem Winkel des aktuellen Raumvektors addiert wird.

**10.** Verfahren nach einem der vorhergehenden Ansprüche, **dadurch gekennzeichnet, dass** der Kurzschluss als aktiver Kurzschluss angelegt wird.

**11.** Verfahren nach Anspruch 10, **dadurch gekennzeichnet, dass** ein Leistungswandler mit Schaltelementen (9, 10), die mit einer Halbbrücke für jede Phase verbunden sind, verwendet wird, um die Statorwicklungen (3) zu versorgen, wobei der aktive Kurzschluss angelegt wird, indem die mit dem hohen Potential des Leistungswandlers verbundenen Schaltelemente (9) in ihren leitenden Zustand und die mit dem niedrigen Potential des Leistungswandlers verbundenen Schaltelemente (10) in ihren Sperrzustand oder umgekehrt geschaltet werden.

**12.** Steuereinheit (11) für eine elektrische Maschine (1), **dadurch gekennzeichnet, dass** sie dazu konfiguriert ist,

- einen Kandidatenwert für die d-Achse (15) der elektrischen Maschine (1) in Abhängigkeit von den über die Statorwicklungen (3) der elektrischen Maschine (1) erfassten Spannungen zu bestimmen;
- einen Kurzschluss an Statorwicklungen (3) der elektrischen Maschine (1) anzulegen;
- im kurzgeschlossenen Zustand in die Statorwicklungen (3) fließende Ströme erfassen;
- die Plausibilität des Kandidatenwertes in Abhängigkeit von einem aus den erfassten Strömen bestimmten q-Strom zu bewerten; und
- den Mess-Offset eines Rotorpositionssensors (5), der einem Rotor (4) der elektrischen Maschine (1) zugeordnet ist, in Abhängigkeit vom q-Strom zu bestimmen,
- wobei die Spannungen zur Bestimmung des Kandidatenwertes mit einem niedrigeren Integritätsniveau als die zur Bestimmung des q-Stromes erfassten Ströme erfasst werden.

**13.** Elektrische Maschine (1) für ein Fahrzeug, umfassend einen Stator (2) mit Statorwicklungen (3), einen Rotor (4), der drehbar an dem Stator (2) befestigt ist, einen Rotorpositionssensor (5), der dem Rotor (4) zugeordnet ist, und eine Steuereinheit (11) nach Anspruch 12.

**Revendications**

**1.** Procédé pour déterminer un décalage de mesure d'un capteur de position de rotor (5) affecté à un rotor (4) d'une machine électrique (1) **caractérisé en ce qu'**il comprend les étapes suivantes consistant à :

- déterminer une valeur candidate pour l'axe d (15) de la machine électrique (1) en fonction des tensions acquises sur les enroulements du stator (3) de la machine électrique (1) ;
- appliquer un court-circuit aux enroulements du stator (3) de la machine électrique (1) ;

- acquérir des courants circulant dans les enroulements du stator (3) à l'état court-circuité ;
- évaluer la plausibilité de la valeur candidate en fonction d'un courant q déterminé à partir des courants acquis ; et
- déterminer le décalage de mesure en fonction du courant q ;

**en ce que** les tensions pour la détermination de la valeur candidate sont acquises avec un niveau d'intégrité inférieur à celui des courants acquis pour la détermination du courant q.

**2.** Procédé selon la revendication 1, **caractérisé en ce que** la plausibilité est supposée si la valeur absolue du courant q déterminé est inférieure à une valeur seuil prédéfinie.

**3.** Procédé selon la revendication 1, **caractérisé en ce que** la plausibilité est supposée si l'angle du vecteur spatial courant dans le système de coordonnées dq ne diffère pas de plus d'un seuil prédéterminé par rapport à zéro degré.

**4.** Procédé selon l'une des revendications précédentes, **caractérisé en ce que** les tensions pour la détermination de la valeur candidate sont acquises en appliquant un courant nul aux enroulements du stator (3).

**5.** Procédé selon l'une des revendications précédentes, **caractérisé en ce que** les tensions sont acquises dans un état de rotation de la machine électrique (1).

**6.** Procédé selon l'une des revendications précédentes, **caractérisé en ce qu'**un courant d est déterminé à partir des courants acquis, **en ce que** le décalage de mesure est déterminé en outre en fonction du courant d.

**7.** Procédé selon la revendication 6, **caractérisé en ce que** l'angle du vecteur spatial courant dans le système de coordonnées dq est utilisé pour la détermination du décalage de mesure.

**8.** Procédé selon la revendication 7, **caractérisé en ce que** l'angle du vecteur spatial courant est déterminé en calculant un arc tangente du quotient du courant d par le courant d et/ou en utilisant une boucle à verrouillage de phase.

**9.** Procédé selon la revendication 7 ou 8, **caractérisé en ce qu'**un déplacement angulaire prédéterminé est ajouté à l'angle du vecteur spatial courant pour la détermination du décalage de mesure.

**10.** Procédé selon l'une des revendications précédentes, **caractérisé en ce que** le court-circuit est appliqué comme un court-circuit actif.

11. Procédé selon la revendication 10, **caractérisé en ce qu'**un convertisseur de puissance comportant des éléments de commutation (9, 10) connectés à un demi-pont pour chaque phase est utilisé pour alimenter les enroulements du stator (3), **en ce que** le court-circuit actif est appliqué en commutant les éléments de commutation (9) connectés au haut potentiel du convertisseur de puissance dans leur état conducteur et les éléments de commutation (10) connectés au bas potentiel du convertisseur de puissance dans leur état de blocage ou vice-versa.

12. Unité de commande (11) pour une machine électrique (1), **caractérisée en ce qu'**elle est conçue pour

- déterminer une valeur candidate pour l'axe d (15) de la machine électrique (1) en fonction des tensions acquises sur des enroulements du stator (3) de la machine électrique (1) ;
- appliquer un court-circuit aux enroulements du stator (3) de la machine électrique (1) ;
- acquérir des courants circulant dans les enroulements du stator (3) à l'état court-circuité ;
- évaluer la plausibilité de la valeur candidate en fonction d'un courant q déterminé à partir des courants acquis ; et
- déterminer le décalage de mesure d'un capteur de position de rotor (5) affecté à un rotor (4) de la machine électrique (1) en fonction du courant q,

**en ce que** les tensions pour la détermination de la valeur candidate sont acquises avec un niveau d'intégrité inférieur à celui des courants acquis pour la détermination du courant q.

13. Machine électrique (1) pour un véhicule, comprenant un stator (2) avec des enroulements du stator (3), un rotor (4) fixé en rotation au stator (2), un capteur de position de rotor (5) affecté au rotor (4) et une unité de commande (11) selon la revendication 12.

Fig. 1

## Fig. 2

## Fig. 3

# Fig. 4

```
┌──────────────┐
│              │ ⟩ S1
└──────┬───────┘
       ↓
┌──────────────┐
│              │ ⟩ S5
└──────┬───────┘
       ↓
┌──────────────┐
│              │ ⟩ S6
└──────┬───────┘
       ↓
┌──────────────┐
│              │ ⟩ S7
└──────┬───────┘
       ↓
┌──────────────┐
│              │ ⟩ S11
└──────┬───────┘
       ↓
┌──────────────┐
│              │ ⟩ S12
└──────┬───────┘
       ↓
┌──────────────┐
│              │ ⟩ S13
└──────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102013221709 A1
- DE 102011090127 A1